# EUROPEAN PATENT APPLICATION

(11) **EP 4 410 514 A1**
(43) Date of publication of application: **07.08.2024**
(21) Application number: 22876448.6
(22) Date of filing: 29.09.2022
(51) Int. Cl.: B29C 45/73, B29C 49/42, B29C 49/70

(54) **MOLDING SYSTEM, MOLDED ARTICLE EXTRACTION MACHINE, MOLDING DEVICE, AND METHOD FOR MANUFACTURING HOLLOW MOLDED ARTICLE**

(30) Priority: 29.09.2021 JP 2021159205
(71) Applicant: Yushin Precision Equipment Co. , Ltd., Kyoto (JP); Sumitomo Heavy Industries, Ltd., Tokyo 141-6025 (JP)
(72) Inventor: HATANO, Yuichi, Kyoto-shi, Kyoto 601-8205 (JP); ANDO, Kazutaka, Kyoto-shi, Kyoto 601-8205 (JP); TANI, Ryosuke, Chiba-shi, Chiba 263-0001 (JP); TAKAHASHI, Rei, Chiba-shi, Chiba 263-0001 (JP)
(74) Representative: Wilson Gunn
(86) International application number: PCT/JP2022/036438
(87) International publication number: WO 2023/054584

(57) **Abstract**

A molding system, an apparatus for taking out molded product, a mold equipment, and a method for manufacturing a hollow molded product that can take out a molded product from a blow mold without coming into contact with an opening portion or an inner surface are provided. An apparatus for taking out molded product 120 in a molding system 100 has an insert portion 12, an abutting portion 13, a recess 14, and a suction port 12b. The insert portion 12 is inserted in a hollow molded product 20 via an opening portion 21 serving as a blow pin extraction port of the hollow molded product 20. The abutting portion 13 is arranged at the circumference of the insert portion 12 and abuts on an outer circumferential surface of the hollow molded product 20 spaced apart by a predetermined distance from the opening portion 21 serving as the blow pin extraction port. The recess 14 is provided between the insert portion 12 and the abutting portion 13, accommodates the opening portion 21 serving as the blow pin extraction port in the state where the outer circumferential surface of the hollow molded product 20 abuts on the abutting portion 13, and forms a stretch of closed space to the inside of the hollow molded product 20. The suction port 12b is provided in the insert portion 12 and sucks an ambient atmosphere.

## Description

### Technical Field

The present invention relates to a molding system, an apparatus for taking out molded product, a mold equipment, a molding machine, and a method for manufacturing a hollow molded product.

### Background Art

According to the related art, blow molding is widely used for molding a hollow resin container such as a polyethylene terephthalate (PET) bottle. As already known, in blow molding, a hollow preform (parison) is arranged in a blow mold and subsequently a blow pin is arranged in the preform. As a blow air is blown into the preform through the blow pin, the preform is molded into a shape corresponding to the cavity of the blow mold.

The molded product is taken out of the blow mold when being opened by an apparatus for taking out molded product. When being taken-out, a method of making the molded product fall out of the blow mold (for example, Patent Literature 1) or a method of taking out the molded product from the blow mold in the state where a flange portion (cap screw portion) of the preform protruding out of the blow mold, when the preform is arranged in the blow mold, is supported or the like (for example, Patent Literature 2) is adopted.

### Prior Art Document

### Patent Literature

Patent Literature 1: JP2006-035672A
Patent Literature 2: JP2007-069241A

### Summary of Invention

### Technical Problem

Recently, a reduction in thickness and weight of a resin container and a material change to use a biodegradable resin or the like are demanded from the viewpoint of environmental protection, and the manufacture of a resin container with lower strength than a traditional one is needed. In the process of manufacturing such a resin container, if the above-mentioned falling method is used to take out a molded product from a blow mold, the molded product may be frequently damaged.

On the other hand, the above-mentioned method for taking out, in which the flange portion of the preform is supported, can avoid damage to the molded product since each molded product can be separately taken out. However, it is difficult for a resin container to use the method of supporting the flange portion in case that the resin container does not have a portion such as the flange portion protruding from the blow mold.

As a technique for individually taking out a resin container that does not have a portion protruding from the blow mold, it is conceivable to take out the molded product from the blow mold in the state where the inner circumferential surface of the opening portion of the molded product with a blow pin inserted in the molded product is supported. However, in the case of a resin container used to contain a food or drink such as a beverage, a support member for taking out the molded product needs to avoid abutting on the opening portion or the inner surface of the container from the viewpoint of hygiene.

An object of the present invention is to provide a molding system that can take out a molded product from the blow mold without coming into contact with the opening portion or the inner surface of the hollow molded product even if the molded product does not have a portion protruding from a blow mold.

Another object of the present invention is to provide an apparatus for taking out molded product that is suitable for using in the molding system.

Still another object of the present invention is to provide a mold equipment that is suitable for using in the molding system.

Still another object of the present invention is to provide a method for manufacturing a hollow molded product, using the molding system.

### Solution to Problem

A configuration of the present invention to solve the foregoing problems will be described below. In order to facilitate understanding, the configuration of the present invention is described with reference numerals given in the drawings. However, the use of the reference numerals is not to limit the present invention to an embodiment.

In order to achieve the foregoing objects, the molding system according to the present invention is assumed to be a molding system for manufacturing a hollow molded product 20 by blow molding. The molding system according to the present invention has a molding machine 110 and an apparatus for taking out molded product 120. The molding machine 110 has a mold equipment 114 in which a hollow molded product is blow-molded in a cavity (221, 241, 251). The apparatus for taking out molded product 110 sucks the hollow molded product molded in the mold equipment 114 by a suction portion 10 and takes out the hollow molded product from the mold equipment. In this apparatus for taking out molded product 120, the suction portion 10 has an insert portion 12, an abutting portion 13, a recess 14 provided between the insert portion 12 and the abutting portion 13, and a suction port 12b. The insert portion 12 is inserted in the hollow molded product through an opening portion 21 served as a blow pin extraction port of the hollow molded product. The abutting portion 13 is arranged, spaced apart from the insert portion 12, and abuts on a part of an outer circumferential surface 22 of the hollow molded product 20 that is spaced apart by a predetermined distance from the opening portion 21 served as the blow pin extraction port. The recess 14 is provided between the insert portion 12 and the abutting portion 13 and forms a closed space 26 communicating with an internal space 24 in the hollow molded product when the part of the hollow molded product where the opening portion 21 served as the blow pin extraction port is formed is accommodated in the recess 14 in the state where the abutting portion 13 is abutting on the outer circumferential surface 22 of the hollow molded product. The suction port 12b is provided in the insert portion 12 and sucks the air in the internal space 24 and the closed space 26.

In this molding system, for example, when the insert portion 12 is inserted through the blow pin extraction port (opening portion 21) of the hollow molded product molded in the mold equipment 114 and the mold equipment is opened in the state where the ambient atmosphere is sucked from the suction port 12b of the insert portion, the hollow molded product 20 moves toward the proximal end side of the insert portion 12 due to an air flow that flows in from the opening portion 21 of the hollow molded product 20, which is the blow pin extraction port. With this movement of the hollow molded product, the opening portion 21 of the hollow molded product, which is the blow pin extraction port, is accommodated in the recess 14. Also, the outer circumferential surface 22 of the hollow molded product, spaced apart by the predetermined distance from the opening portion 21, which is the blow pin extraction port, abuts on the abutting portion 13. As the result, the recess 14 and the internal space 24 in the hollow molded product 20 form a continuous closed space 26. Since the suction of the ambient atmosphere from the suction port 12b of the insert portion 12 is continued even in this state, the outer circumferential surface 22 of the hollow molded product is pressed against the abutting portion 13 and the outer circumferential surface 22 of the hollow molded product can be supported by the abutting portion 13 more securely. As the hollow molded product is moved in such a state, even the hollow molded product without having a portion such as a flange portion protruding from the mold equipment can be taken out from the mold equipment 114 without making the insert portion 12 come into contact with the opening portion and the inner surface of the hollow molded product.

More specifically in the suction portion 10, a coupling portion 11 that couples the insert portion 12 with the abutting portion 13 and that forms a recess between the insert portion and the abutting portion is provided. An additional suction port 13c that sucks the outer circumferential surface 22 of the hollow molded product is provided at an abutting surface 13b abutting on the hollow molded product, of the abutting portion 13. Also, an air flow path 13d communicating with the suction port 12b and the additional suction port 13c is formed in the insert portion 12, the coupling portion 11, and the abutting portion 13. The suction port 12b of the insert portion 12 and the additional suction port 13c can also be used as an injection port to inject a pressurized gas. If a configuration in which the insert portion 12 has an injection port to inject a pressurized gas is adopted, when the insert portion 12 is inserted through the opening portion 21 of the hollow molded product molded in the mold equipment and a pressurized gas is injected from the injection port 12b of the insert portion, the hollow molded product 20 is pressed against the mold equipment. When, in this state, the mold equipment is in a split-mold opened state except for a mold portion corresponding to a bottom portion of the hollow molded product 20 that faces the distal end of the insert portion 12, the bottom portion of the hollow molded product 20 is held in the state of being pressed against the mold portion corresponding to this bottom portion. In this state, the abutting portion 13 is advanced, and when the abutting portion 13 has advanced to a position to abut on the outer circumferential surface 22 of the hollow molded product, the suction of the ambient atmosphere is started from the suction port 12b of the insert portion 12. Thus, the outer circumferential surface 22 of the hollow molded product 20 is pressed against the abutting portion 13, and the outer circumferential surface 22 of the hollow molded product 20 is supported by the abutting portion 13. Therefore, the outer circumferential surface 22 of the hollow molded product can be made to securely abut on the abutting surface 13b of the abutting portion 13. Also, if the suction port 13c of the abutting portion 13 is switched to the injection port and the pressurized gas is injected from the injection port 13c of the abutting portion 13 when taking out the molded product that has been taken out, from the apparatus for taking out molded product, the molded product can be released more securely.

As a matter of course, the abutting portion 13 may also have an elastic member 13e at the abutting surface abutting on the hollow molded product. As the elastic member 13e is provided, the shape of the abutting surface of the abutting portion 13 is deformed in a state aligned with the outer circumferential surface of the molded product and therefore the contact area between the outer circumferential surface of the molded product and the abutting surface of the abutting portion 13 increases. As a result, the outer circumferential surface of the molded product can be supported by the abutting portion more securely.

The mold equipment 114 used in the molding system according to the present invention has a first mold member 252 forming a part of the cavity 251, and a second mold member 253 provided adjacent to the first mold member 252 and forming a part of the cavity 251. The mold equipment 114 may be configured in such a way that a constituent surface 251Aa of the cavity of the first mold member 252 and a constituent surface 251Ab of the cavity of the second mold member are arranged differently from a closed-mold state and that the hollow molded product molded in the cavity is sucked and held in the state of abutting on the constituent surface 251Aa of the cavity of the first mold member. In this mold equipment, since the hollow molded product is sucked and held in the mold equipment, the hollow molded product is held in the mold equipment even when the mold equipment is in a split-mold opened state in order to take out the molded product. Therefore, the molded product can be easily taken out.

The first mold member 252 has the first bottom wall surface portion 251Aa of a bottom wall surface 251A of the cavity 251, as a constituent surface of the cavity. The second mold member has the second bottom wall surface portion 251Ab of the bottom wall surface 251A of the cavity 251, as a constituent surface of the cavity. The first bottom wall surface portion 251Aa of the first mold member 252 and the second bottom wall surface portion 251Ab of the second mold member 253 form the bottom wall surface 251A of the cavity 251 when in the closed-mold state. Also, the mold equipment 114 can be configured in such a way that the hollow molded product is sucked and held at the first bottom wall surface portion 251Aa of the first mold member 252 after the hollow molded product 20 is molded.

Specifically in the mold equipment 114, the second mold member 253 is moved so as to form a recessed part 254 between the second bottom wall surface portion 251Ab of the second mold member 253 and the outer surface of the hollow molded product after the hollow molded product is molded. In the mold equipment 114, a suction-holding state, where the hollow molded product is sucked and held to the first bottom wall surface portion 251Aa of the first mold member 252 by bringing an inside of the recessed part 254 into a depressurized state, is prepared. Also, it can be configured in such a way that a non-suction-holding state, where the hollow molded product is not sucked and held to the first bottom wall surface portion 251Aa of the first mold member 252 is provided by bringing the inside of the recessed part 254 into a non-depressurized state, is formed. The suction-holding state is provided by bringing an inside of the recessed part 254 into a depressurized state, and the non-suction-holding state is provided by bringing the inside of the recessed part 254 into a non-depressurized state or a pressurized state in the recessed part 254. The suction-holding state can be achieved by providing a suction port 255a that is exposed inside the recessed part 254 and that sucks the atmosphere inside the recessed part 254. According to these configurations, the hollow molded product is sucked and held in the state of abutting on the first bottom wall surface portion 252Aa, which is the constituent surface of the cavity 251 of the first mold member 252. With the above configurations, the hollow molded product is sucked and held in the mold equipment and therefore the molded product is held in the mold equipment even when the mold equipment is in the split-mold opened state in order to take out the molded product. Therefore, the outer circumferential surface of the hollow molded product can be made to abut on the abutting portion 13 more securely and the hollow molded product can be taken out more easily.

The mold equipment 114 may also have plural mold members 205 forming the wall surface except the bottom wall surface 251A of the cavity 251. In this case, it may be configured in such a way that the suction state is maintained for a predetermined period after the plural mold members 205 are taken out from the molded product, or the second mold member 253 may move in such a way as to move the hollow molded product 20 in a direction away from the first bottom wall surface portion 251Aa after the plural mold members 205 are taken out from the hollow molded product 20. To achieve this, the second mold member 253 is provided in such a way as to movable in a direction of pressing the hollow molded product molded in the cavity. Thus, the hollow molded product 20 can be made to securely abut on the abutting portion 13 of the suction portion 10. Also, the injection port 255a that is exposed in the recessed part 254 and that injects a pressurized gas in the recessed part 254 may be provided, instead of moving the second mold member 253.

The present invention can also be understood as a method for manufacturing a hollow molded product by blow molding, using the molding machine having the mold equipment 114, in which the hollow molded product is blow-molded in the cavity (221, 241, 251), and the apparatus for taking out molded product 120, in which the hollow molded product 20 molded in the mold equipment is sucked by the suction portion 10 and taken out from the mold equipment. In this method, first, the mold equipment 114 having the first mold member and the second mold member is prepared. The first mold member 252 has the first bottom wall surface portion 251Aa of the bottom wall surface 251A of the cavity 251, and the second mold member 253 is provided adjacent to the first mold member 252 and has the second bottom wall surface portion 251Ab of the bottom wall surface of the cavity. Next, the bottom wall surface of the cavity is formed when the first bottom wall surface portion 251Aa of the first mold member 252 and the second bottom wall surface portion 251Ab of the second mold member 253 are in the closed-mold state. Then, after the hollow molded product 20 is molded, the hollow molded product 20 is sucked and held at the first bottom wall surface portion 251Aa of the first mold member 252.

Also, in a method for taking out molded product in which a molded product formed by blow molding is taken out from the mold equipment of the molding machine, first, a pressurized gas is injected into the molded product held in the mold equipment. Next, the mold equipment is opened in the state where the pressurized gas is injected. Subsequently, the closed space 26 communicating with the inside of the hollow molded product is formed in the state where the mold equipment is opened. Then, after the closed space is formed, the inside of the closed space is depressurized. In this method for taking out molded product, for example, when the pressurized gas is injected into the hollow molded product molded in the blow mold, the hollow molded product is getting into the state of being pressed against the blow mold. When the blow mold except the mold portion corresponding to the bottom portion of the hollow molded product is opened in this state, the bottom portion of the hollow molded product is held in the state of being pressed against the mold portion corresponding to this bottom portion. When the inside of the closed space communicating with the inside of the molded product is depressurized in this state, the hollow molded product can be held in the apparatus for taking out molded product 120. Therefore, even if the hollow molded product does not have a portion protruding from the blow mold, the hollow molded product can be taken out from the blow mold without coming into contact with the opening portion and the inner surface of the hollow molded product 120.

### Advantageous Effects of Invention

According to the present invention, even if a hollow molded product does not have a portion protruding from the blow mold, the hollow molded product can be taken out from the blow mold without coming into contact with the opening portion and the inner surface of the hollow molded product.

### Brief Description of Drawings

[FIG. 1] FIG. 1 is a perspective view schematically illustrating an example of a molding system according to one embodiment of the present invention.
[FIG. 2] FIG. 2(A) is a side view schematically illustrating an opened-mold state of a mold equipment provided in the molding system according to the one embodiment of the present invention. FIG. 2(B) is a side view schematically illustrating a closed-mold state of the mold equipment provided in the molding system according to the one embodiment of the present invention.
[FIG. 3] FIG. 3(A) is a perspective view schematically illustrating an example of a suction portion of an apparatus for taking out molded product provided in the molding system according to the one embodiment of the present invention. FIG. 3(B) is a front view schematically illustrating the suction portion. FIG. 3(C) is a transverse cross-sectional view schematically illustrating the suction portion.
[FIG. 4] FIG. 4(A) is a front view schematically illustrating the state where the suction portion illustrated in FIG. 3 holds a molded product. FIG. 4(B) is a transverse cross-sectional view schematically illustrating the suction portion.
[FIG. 5] FIGS. 5(A)-(D) are views schematically illustrating an example of a process in which the suction portion illustrated in FIG. 3 holds the molded product.
[FIG. 6] FIG. 6(A) is a front view schematically illustrating another example of the suction portion of the apparatus for taking out molded product provided in the molding system according to the one embodiment of the present invention. FIG. 6(B) is a transverse cross-sectional view schematically illustrating the suction portion.
[FIG. 7] FIGS. 7(A)-(D) are views schematically illustrating another example of the process in which the suction portion illustrated in FIG. 3 holds the molded product.
[FIG. 8] FIGS. 8(A)-(D) are views schematically illustrating another example of the process in which the suction portion illustrated in FIG. 3 holds the molded product.
[FIG. 9] FIG. 9 is a view schematically illustrating a modified example of the mold equipment provided in the molding system according to the one embodiment of the present invention.

### Description of Embodiments

Embodiments of the present invention will now be described in detail with reference to the drawings. In the embodiment below, the present invention is embodied in a molding system that includes a molding machine having a mold equipment performing injection molding of a preform and blow molding of a molded product in parallel, and a so-called traverse-type apparatus for taking out molded product.

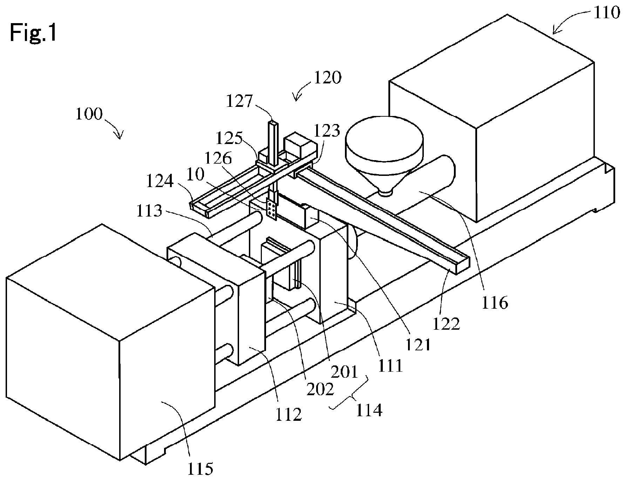

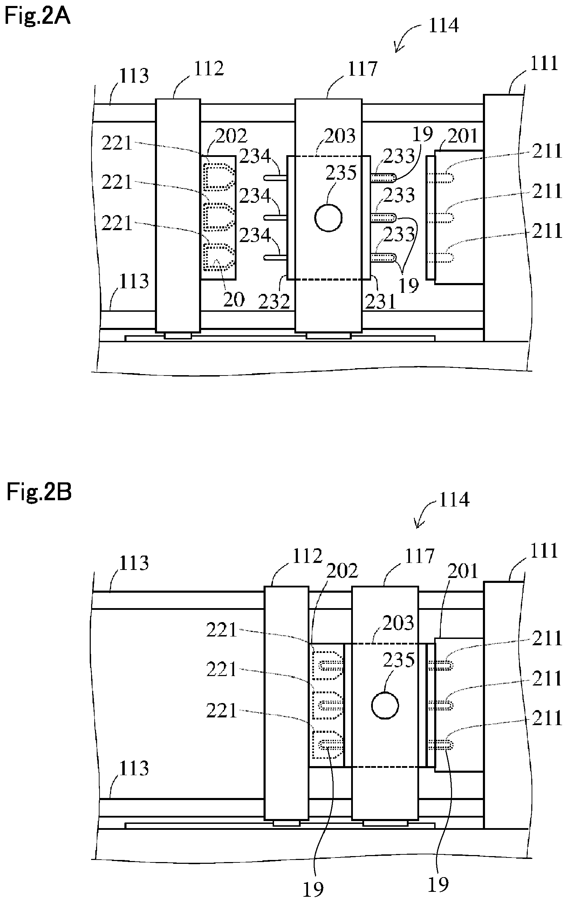

FIG. 1 is a schematic perspective view of the molding system according to the embodiment. FIG. 2(A) and FIG. 2(B) are side views schematically illustrating the mold equipment provided in the molding system. FIG. 2(A) corresponds to an opened-mold state. FIG. 2(B) corresponds to a closed-mold state. In FIG. 1, the description of a support frame and an intermediate mold illustrated in FIG. 2(A) and FIG. 2(B) is omitted.

### (Molding Operation)

As illustrated in FIG. 1, a molding system 100 has a molding machine 110, and an apparatus for taking out molded product 120 that takes out a molded product molded in the molding machine 110. Although not particularly limited, a mold equipment 114 provided in the molding machine 110 has a cavity 211 functioning as an injection mold and a cavity 221 functioning as a blow mold. In the cavity 211 functioning as the injection mold, a closed-bottom parison that is a preform 19 is injection-molded. This preform 19 is moved to the cavity 221 functioning as the blow mold and a desired hollow molded product corresponding to the blow mold is blow-molded in the cavity 221.

The molding machine 110 has a known structure (for example, JP2018-167453A or the like), in which a fixed platen 111 and a movable platen 112 are arranged in the state of being opposite each other. The movable platen 112 is supported slidably by tie bars 113 arranged along a horizontal direction from the four corners of the fixed platen 111. The movable platen 112 is driven to move along the tie bars 113 by a mold closing device 115, thereby the mold equipment 114, having a fixed mold 201 installed on the fixed platen 111 and a movable mold 202 installed on the movable platen 112, can be opened and closed.

The apparatus for taking out molded product 120 includes a mounting stand 121, a horizontal frame 122, a first traveling body 123, an extraction frame 124, a second traveling body 125, a head 126, and a lifting arm 127. The horizontal frame 122 extends in a direction of taking out a molded product produced in the molding machine 110, out of the molding machine. As a proximal end portion of the horizontal frame 122 is fixed on the mounting stand 121 mounted on the fixed platen 111, the apparatus for taking out molded product 120 is attached to the molding machine 110.

The first traveling body 123 is supported on the horizontal frame 122 and moves forward and backward along the horizontal frame 122, using a servo motor as a drive source. The extraction frame 124 is fixed at a proximal end portion of the extraction frame 124 to the first traveling body 123 and is arranged in such a way as to extend in the direction of opening and closing of the mold equipment 114. The second traveling body 125 is supported on the extraction frame 124 and moves forward and backward along the extraction frame 124, using a servo motor as a drive source. The head 126 is supported at a lower end of the lifting arm 127. The lifting arm 127 is arranged in such a way as to extend in a vertical direction and moves up and down in the vertical direction, using the servo motor of the second traveling body 125 as a drive source. The head 126 moves up and down in the vertical direction accompanied by the movement of the lifting arm 127 to the vertical direction. The head 126 includes one or plural suction portions 10 (described in detail below) arranged at a position corresponding to a molded product forming position of the movable mold 202.

As illustrated in FIG. 2(A) and FIG. 2(B), the mold equipment 114 provided in the molding machine 110 in this embodiment includes the fixed mold 201, the movable mold 202, and an intermediate mold 203. As illustrated in FIG. 2(A), the intermediate mold 203 has shape of a rectangular parallelepiped including two main surfaces 231, 232 arranged in the state of facing the fixed mold 201 and the movable mold 202, respectively. The intermediate mold 203 is supported by a support frame 117 provided between the fixed platen 111 and the movable platen 112. The support frame 117 is provided on the tie bar 113 in such a way as to be movable in the direction of movement of the movable platen 112 (direction in which the tie bar 113 extends). The support frame 117 is driven independently of the movable platen 112 by a drive device, not illustrated. Also, the intermediate mold 203 includes a rotary shaft 235 horizontally arranged and orthogonal to the direction of movement of the movable platen 112, at an intermediate position in the vertical direction, and this rotary shaft 235 is rotatably supported by the support frame 117. As the rotary shaft 235 is rotationally driven using a servo motor of the support frame 117 as a drive source, the state where the one main surface 231 of the intermediate mold 203 faces the fixed mold 201 while the other main surface 232 of the intermediate mold 203 faces the movable mold 202, and the state where the one main surface 231 of the intermediate mold 203 faces the movable mold 202 while the other main surface 232 of the intermediate mold 203 faces the fixed mold 201, are achieved. That is, as the intermediate mold 203 is rotationally driven by 180 degrees, the combination of the molds arranged facing the surfaces can be changed. In FIG. 2(A) and FIG. 2(B), for the sake of explanation, the outline of the intermediate mold 203 existing behind the support frame 117 is indicated by a dashed line.

Also, as indicated by a dashed line in FIG. 2(A) and FIG. 2(B), plural elongated cavities 211 for injection molding having a hemispheric closed bottom are provided on the surface facing the intermediate mold 203, of the fixed mold 201. The fixed mold 201 including the cavities 211 for injection molding functions as an injection mold, as described later. For example, if an arrangement of two lines in the horizontal direction and three lines in the vertical direction is adopted, a total of six cavities 211 for injection molding are provided in the fixed mold 201. Also, a blow pin-rod 233 is provided at a position corresponding to each cavity 211 for injection molding in the state of being arranged at the position facing the fixed mold 201 on the one main surface 231 of the intermediate mold 203. Similarly, a blow pin-rod 234 is provided at a position corresponding to each cavity 211 for injection molding in the state of being arranged at the position facing the fixed mold 201 on the other main surface 232 of the intermediate mold 203.

Also, as indicated by a dashed line in FIG. 2(A) and FIG. 2 (B), plural cavities 221 for blow molding are provided at positions corresponding to the blow pin-rods 233, 234 of the intermediate mold 203, on the surface facing the intermediate mold 203, of the movable mold 202. In the case of the foregoing example, the six cavities 221 for blow molding are provided in the movable mold 202. The inner surface of each cavity 221 for blow molding has a shape corresponding to the outer surface of the foregoing hollow molded product, and the movable mold 202 having the cavities 221 for blow molding functions as a blow mold, as described later.

As illustrated in FIG. 2(B), in the case where the mold equipment 114 is in the closed-mold state in the state where the main surface 231 of the intermediate mold 203 faces the fixed mold 201, the blow pin-rods 233 on the main surface 231 of the intermediate mold 203 are inserted in the cavities 211 respectively for injection molding in the fixed mold 201, and preform cavities corresponding to the shape of the foregoing preform (closed-bottom parison) are formed by the blow pin-rods 233 and the cavities 211 respectively for injection molding. As a resin that is heated and melted is injected into the preform cavities from an injection device 116 connected to the fixed platen 111, the preforms 19 are molded. These preforms 19 are taken out from the cavities 211 respectively for injection molding in the state of being held by the blow pin-rods 233 (state of covering the blow pin-rods 233) when the mold equipment 114 is in the opened-mold state (see FIG. 2(A)). Then, when the intermediate mold 203 is rotationally driven by 180 degrees, the blow pin-rods 234 holding the preforms 19 are arranged in the state of facing each cavity 221 for blow molding in the movable mold 202.

Also, in the case where it is in the closed-mold state where the main surface 231 faces the fixed mold 201, the blow pin-rods 234 arranged on the other main surface 232 of the intermediate mold 203 and holding the preforms 19 are inserted in the cavities 221 respectively for blow molding in the movable mold 202. In this case, since the injection molding of the preforms 19 is performed using the blow pin-rods 234 in advance, the blow pin-rods 234 are in the state of holding the preforms 19 respectively. In this state, the blow pin-rods 234 function as blow pins, and as a blow air (pressurized gas) is blown into the preforms 19 from the blow pin-rods 234 respectively, hollow molded products 20 having an outer surface corresponding to the shape of the cavity 221 is blow-molded. Also, at this time, each molded product is in the state of being released from the blow pin-rods 234 by the blow air, respectively. In FIG. 2(A) and FIG. 2(B), for the sake of explanation, the hollow molded product 20 blow-molded in the cavity 221 is indicated by a dashed line.

As described above, in the molding machine 110 according to this embodiment, under the circumstance where the mold equipment 114 is in the closed-mold state, the injection molding of the preforms 19 on a fixed mold 201 side of the intermediate mold 203 and the blow molding of the desired hollow molded products 20 on a movable mold 202 side of the intermediate mold 203 are carried out in parallel.

Meanwhile, in the case where the mold equipment 114 is in the opened-mold state, the fixed mold 201 and the movable mold 202 are spaced apart from each other and the support frame 117 is arranged in the state where the intermediate mold 203 spaces the fixed mold 201 and the movable mold 202 apart. At this time, as described above, the preforms 19 are held by the blow pin-rods 233 on the main surface on the fixed mold 201 side of the intermediate mold 203, and the preforms 19 held by the blow pin-rods 234 on the main surface on the movable mold 202 side of the intermediate mold 203 are taken out from the blow pin-rods 234 as a result of blow molding.

Also, as will be described in detail below, under the circumstance where the mold equipment 114 is in the opened-mold state, the head 126 of the foregoing apparatus for taking out molded product 120 is inserted in the space between the movable mold 202 and the intermediate mold 203, and the hollow molded product 20 held in the cavity 221 of the movable mold 202 is taken out.

As the hollow molded product in the cavity 221 is taken out, the intermediate mold 203 is rotated 180 degrees and subsequently the mold equipment 114 is in the closed-mold state, and the injection molding of the preform 19 and the blow molding of the hollow molded product 20 are carried out again.

### (Taking out of Hollow Molded Product)

Next, the taking-out of the hollow molded product in the cavity 221 will be described below. In the foregoing example, plural hollow molded products are formed all at once by blow molding and the plural hollow molded products are taken out at a time by the apparatus for taking out molded product 120. In this embodiment, there is no difference between the configurations for taking out the plural hollow molded products molded in the individual cavities 221 and therefore hereinafter an example where one hollow molded product is taken out from one cavity 221 molding one hollow molded product is described as a representative example.

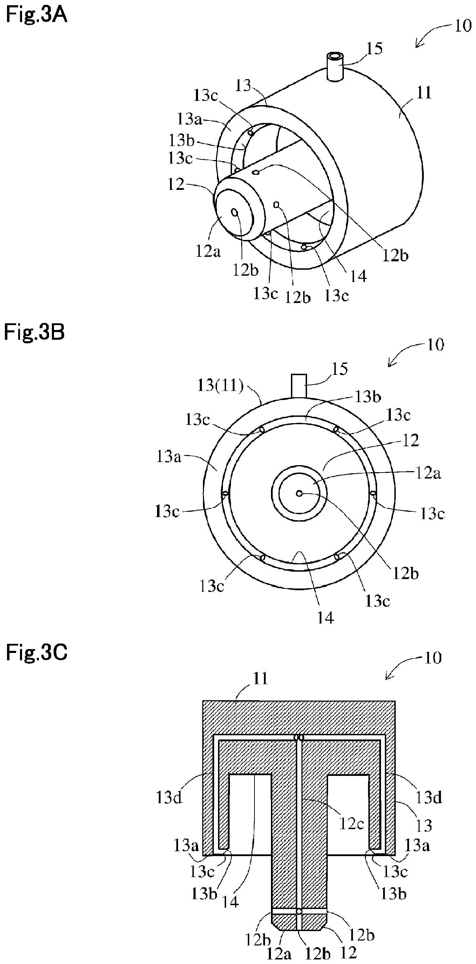

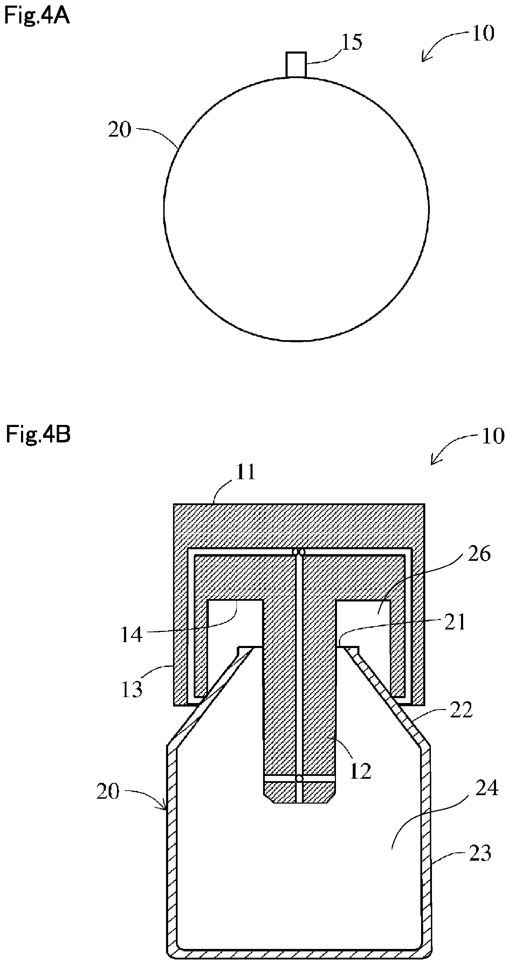

FIG. 3(A) is a perspective view schematically illustrating an example of the suction portion 10 provided in the head 126 of the apparatus for taking out molded product 120 according to the one embodiment of the present invention. FIG. 3(B) is a front view schematically illustrating the suction portion 10. FIG. 3(C) is a transverse cross-sectional view schematically illustrating the suction portion 10. Also, FIG. 4(A) is a front view schematically illustrating the state where the suction portion 10 illustrated in FIGS. 3(A) to 3(C) holds the hollow molded product 20. FIG. 3(B) is a transverse cross-sectional view schematically illustrating the state where the suction portion 10 holds the hollow molded product 20. The hollow molded product 20 in this embodiment is a closed-bottom cylindrical beverage container, including an opening portion (21) served as an opening for drinking, a body portion 23 made up of a cylinder with the same diameter, and a shoulder portion 22 smoothly connecting to the opening portion 21. Since the opening portion 21 is configured to be sealed by heat sealing, the hollow molded product 20 does not have a flange portion (cap screw portion) like the flange portion used to hold a molded product by the foregoing related-art apparatus for taking out molded product. The opening portion 21 is formed as a thick portion whose entire circumference is thicker than the wall thickness of the other parts of the hollow molded product 20, at the time of injection molding of the foregoing closed-bottom parison as the preform 19.

As illustrated in FIGS. 3(A) to 3(C), each of the plural suction portions 10 provided in the head 126 of the apparatus for taking out molded product 120 has a structure in which an insert portion 12 and an abutting portion 13 are formed at a circular columnar base plate 11. The insert portion 12 has a circular columnar shape concentric with the centerline of the base plate 11 and extending along an imaginary centerline of the base plate 11. As illustrated in FIG. 4(B), the diameter of the transverse cross section of the insert portion 12 is smaller than the diameter of the opening portion 21 of the hollow molded product 20 to be taken out. The opening portion 21 is an extraction port for a blow pin inserted in the hollow molded product 20 in order to blow-mold the hollow molded product 20 in the blow mold, and the insert portion 12 is inserted in the hollow molded product 20 through the opening portion 21.

As illustrated in FIGS. 3(A) to 3(C), the insert portion 12 has, at a distal end part, plural suction ports 12b that suck the ambient atmosphere. Although not particularly limited, in this embodiment, the insert portion 12 has one suction port 12b at the center of a distal end 12a, and the four suction ports 12b formed at equal intervals on the outer circumferential surface near the distal end 12a. Each suction port 12b is connected to an air flow path 12c arranged in the insert portion 12, and the other end of the air flow path 12c is connected to a pipe connection portion 15 protruding from the outer circumferential surface of the base plate 11. A vacuum pump or a vacuum generator (ejector) is, for example, connected to the pipe connection portion 15 through an open/close valve or the like. Switching the opening and closing of the open/close valve and the supply and no-supply of a pressurized gas to the vacuum generator performs on and off the suction by the plural suction ports 12b (sucking state and non-sucking state). The non-sucking state includes a pressurized state, as will be described later.

As illustrated in FIGS. 3(A) to 3(C), the abutting portion 13 has a cylindrical shape extending along the imaginary centerline of the base plate 11 so as to be concentric with the imaginary centerline of the base plate 11. The length in the axial direction of the abutting portion 13 is smaller than the length in the axial direction of the insert portion 12. Although not particularly limited, in this embodiment, the outer diameter of the base plate 11 and the outer diameter of the abutting portion 13 are the same, and the outer circumferential surface of the base plate 11 and the outer circumferential surface of the abutting portion 13 form a continuous outer circumferential surface.

An annular recess 14 is provided between the insert portion 12 and the abutting portion 13. The annular recess 14 accommodates the opening portion 21 of the hollow molded product 20 to be taken out. In the state where the opening portion 21 of the hollow molded product 20 to be taken out is accommodated in the annular recess 14, an annular abutting surface 13b of the cylindrical abutting portion 13 continuously abuts on the outer circumferential surface of the hollow molded product 20 spaced apart by a predetermined distance from the opening portion 21 of the hollow molded product 20. In this embodiment, the abutting portion 13 abuts on the outer circumferential surface formed of the shoulder portion 22, as illustrated in FIG. 4 (A) and FIG. 4 (B) .

In this state, the annular recess 14 forms a closed space 26 communicating with an internal space 24 of the hollow molded product 20. The closed space 26 is not necessary a completely airtight closed space and may be any space that can reduce the pressure in the hollow molded product 20 by the suction through the suction port 12b of the insert portion 12. That is, if the inside of the hollow molded product 20 can be depressurized by the suction through the suction port 12b of the insert portion 12, for example, a configuration in which a gap exists between the outer circumferential surface of the hollow molded product 20 and the abutting surface 13b of the abutting portion 13, or a configuration in which a penetration hole, an opening portion or the like exists on the cylindrical surface forming the abutting surface 13b of the abutting portion 13, may be adopted.

In this embodiment, an inclined surface aligned with the shoulder portion 22 of the hollow molded product 20 forms the abutting surface 13b, as illustrated in FIG. 4(A) and FIG. 4(B). The abutting surface 13b formed by the inclined surface is provided with a predetermined width at the inner circumferential edge of the abutting portion 13. Thus, the abutting area between the abutting portion 13, the outer circumferential surface of the shoulder portion 22, and the abutting surface 13b formed by the inclined surface can be increased and the closed space 26 can be easily formed.

Also, the abutting portion 13 has additional suction ports 13c that suck the outer circumferential surface of the hollow molded product 20, on the inclined surface, which is the abutting surface 13b abutting on the hollow molded product 20. Although not particularly limited, in this embodiment, the six additional suction ports 13c are arranged at equal intervals on the inclined surface, which is the abutting surface 13b. Each additional suction port 13c is connected to an air flow path 13d arranged in the abutting portion 13, and the other end of the air flow path 13d is connected to the air flow path 12c. Therefore, the on-off of the suction at the additional suction ports 13c of the abutting portion 13 (sucking state and non-sucking state) is switched synchronously with the on-off of the suction at the suction ports 12b of the insert portion 12.

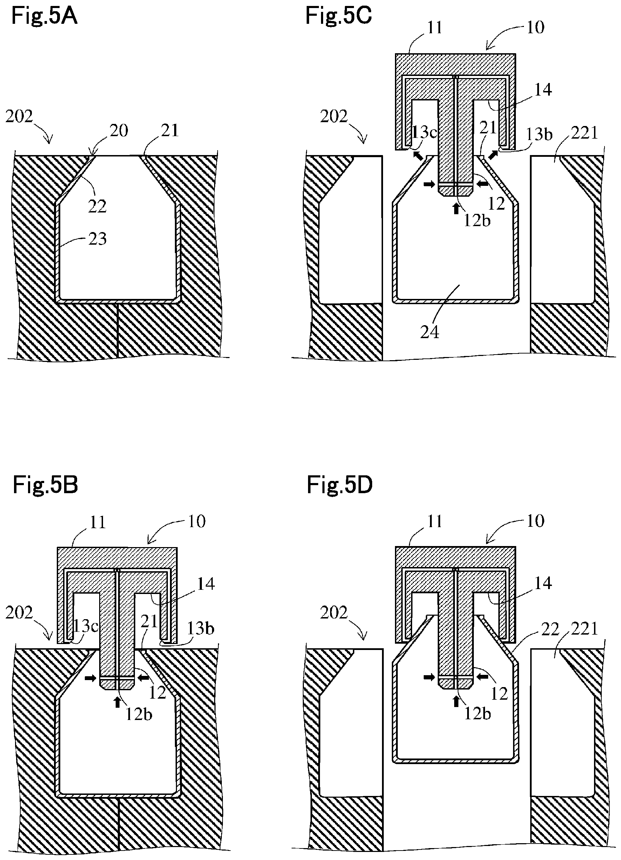

Subsequently, the procedure for the foregoing suction portion 10 to hold the hollow molded product 20 will be described below. FIGS. 5(A) to 5(D) are views schematically illustrating the process for the foregoing suction portion 10 to hold the hollow molded product 20.

FIG. 5(A) is a view illustrating the state where the blow pin-rod 233 or 234 having injected the blow air is extracted from the opening portion 21 of the hollow molded product 20, which is the blow pin extraction port, after the preform 19 [FIG. 2(A)] is molded by the blow air into the shape corresponding to the cavity 221 of the movable mold 202, which is the blow mold.

As illustrated in FIG. 5(A), in this embodiment, the movable mold 202 is bisected along a vertical plane including the imaginary centerline of the body portion 23 of the hollow molded product 20. When the movable mold 202 is in the split-mold opened state, a space is formed so that the hollow molded product 20 can be taken out in the vertical direction or the direction in which the imaginary centerline of the body portion 23 extends, without interfering with the movable mold 202. In the cavity 221 of the movable mold 202 in the split-mold closed state, a recess aligned with the foregoing thick portion forming the opening portion 21 is provided at a position corresponding to the opening portion 21 of the hollow molded product 20. Therefore, in the case where the preform 19 is arranged in the cavity 221 of the movable mold 202, the entirety of the preform 19 is accommodated in the movable mold 202 and the preform 19 (and the hollow molded product 20) has a configuration without having a portion protruding out of the movable mold 202.

In this state, the suction portion 10 is arranged in relation to the hollow molded product 20 so that the opening portion 21 and the insert portion 12 face each other, and the insert portion 12 is inserted in the hollow molded product 20 through the opening portion 21, as illustrated in FIG. 5(B). Although not particularly limited, in this embodiment, since the hollow molded product 20 is arranged so that the imaginary centerline of the body portion 23 is horizontal, the insert portion 12 is inserted in the hollow molded product 20 by moving in the horizontal direction. Also, though not particularly limited, in this embodiment, at this point, the length in the direction of the imaginary centerline of the insert portion 12 is designed in such a way that the distal end 12a of the insert portion 12 is in the state of being arranged nearby a changeover part between the shoulder portion 22 and the body portion 23, in the direction in which the imaginary centerline of the hollow molded product 20 extends.

Then, in this state, the plural suction ports 12b of the insert portion 12 and the plural additional suction ports 13c of the abutting portion 13 are switched from the non-sucking state to the sucking state. Thus, the ambient atmosphere is sucked in from the plural suction ports 12b of the insert portion 12 and an air flow flowing into the hollow molded product 20 from outside through the opening portion 21 is generated.

In this state, the movable mold 202 is put into the split-mold opened state, as illustrated in FIG. 5(C). With this opening of the split mold, the hollow molded product 20 moves to the proximal end (base plate 11) of the insert portion 12 due to the air flow flowing in from the opening portion 21. With the movement of the hollow molded product 20, the opening portion 21 of the hollow molded product 20 is accommodated in the recess 14 and the shoulder portion 22 of the hollow molded product 20 abuts on the inclined surface, which is the abutting surface 13b of the abutting portion 13, as illustrated in FIG. 5(D) . As a result, a continuous hollow space is formed by the recess 14 and the internal space of the hollow molded product 20. Also, in the process of this movement, the movement of the opening portion 21 to the recess 14 is prompted by the air flow caused by the suction through the suction ports 13c of the abutting portion 13, and the state where the shoulder portion 22 abuts on the abutting surface 13b is maintained by the suction through the suction ports 13c. Also, since the suction of the ambient atmosphere from the suction ports 12b of the insert portion 12 is continued even in this state, the shoulder portion 22 of the hollow molded product 20 is pressed against the abutting surface 13b and the shoulder portion 22 of the hollow molded product 20 is supported by the abutting portion 13 more securely.

As the suction portion 10 holding the hollow molded product 20 in this way is moved vertically upward by the apparatus for taking out molded product 120, the hollow molded product 20 can be taken out from the movable mold 202.

As described above, in the molding system 100 (apparatus for taking out molded product 120) including the suction portion 10 according to this embodiment, even the hollow molded product 20 without having a portion protruding from the movable mold 202 can be taken out from the movable mold 202 without coming into contact with the opening portion 21 and the inner surface of the hollow molded product 20. Thus, even a hollow molded product to which a reduction in thickness and weight or a material change to use a biodegradable resin or the like is applied can be taken out from the blow mold while avoiding damage to the hollow molded product and contamination of the opening portion.

While a configuration in which the abutting surface 13b forming the inclined surface has the additional suction ports 13c is adopted as a particularly preferred form in the foregoing embodiment, it is not essential to include the additional suction ports 13c. As the suction of the ambient atmosphere from the plural suction ports 12b is continued in the state where the continuous closed space 26 is formed by the recess 14 and the internal space of the hollow molded product 20, the shoulder portion 22 of the hollow molded product 20 is pressed against the abutting surface 13b forming the inclined surface of the abutting portion 13. Therefore, even in the configuration without having the additional suction ports 13c, the shoulder portion 22 of the hollow molded product 20 is supported by the abutting portion 13. In this case, it is not essential to provide the abutting surface 13b formed by the inclined surface at the inner circumferential edge of the abutting portion 13, and the inner circumferential edge of the abutting portion 13 may be formed by a corner portion or a curved surface.

Also, while a configuration in which the on-off states of the suction at the suction ports 12b and the suction ports 13c are switched synchronously and simultaneously is performed in the foregoing embodiment, a configuration in which a vacuum system that switches the on-off of the suction at the suction ports 12b and a vacuum system that switches the on-off of the suction at the suction ports 13c are separately provided can be adopted.

Moreover, while a configuration in which a vacuum system that provides a suction force to the suction ports 12b and the additional suction ports 13c is connected to the pipe connection portion 15 is described in the foregoing embodiment, for example, a configuration in which an ejector is provided on the base plate 11 and in which a compressor or the like is used for the ejector to supply a pressurized gas, thus depressurizing inside the air flow path 12c connected to the suction port of the ejector, can be adopted.

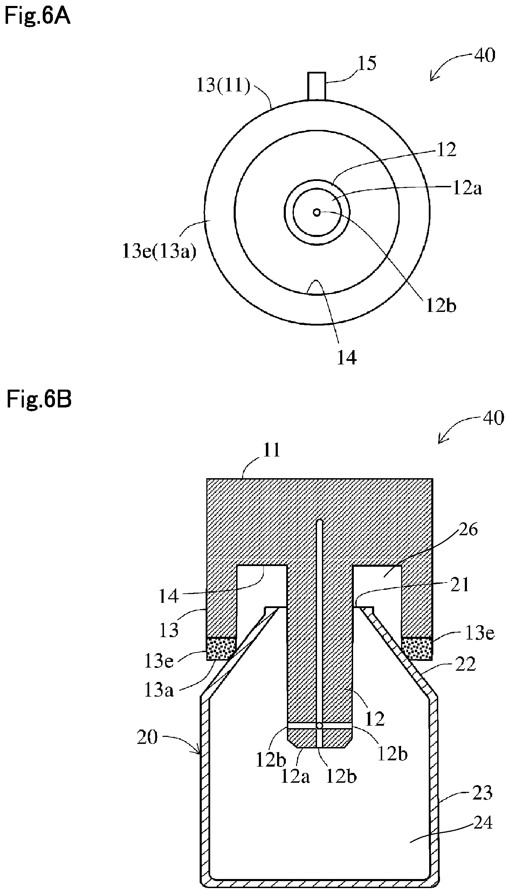

Next, based on FIG. 6(A) and FIG. 6(B), another suction portion 40 provided in the apparatus for taking out molded product according to the present invention will be described below. FIG. 6(A) is a front view schematically illustrating the suction portion 40. FIG. 6(B) is a transverse cross-sectional view schematically illustrating the suction portion 40. The suction portion 40 illustrated in FIG. 6(A) and FIG. 6 (B) is different from the suction portion 10 described when using FIGS. 3(A) to 3(C) only in the configuration of the abutting portion 13. The other configurations are the same and therefore the same elements are denoted by the same reference numerals as in FIGS. 3(A) to 3(C). The suction portion 40 is used in place of the foregoing suction portion 10 in the molding system 100.

The suction portion 40 differs from the foregoing suction portion 10 in having an elastic member 13e at a position with a predetermined length from a distal end 13a of the abutting portion 13 including an abutting surface abutting on the hollow molded product 20. Although the material of the elastic member 13e is not particularly limited, for example, a rubber material such as silicone rubber, nitrile rubber or urethane rubber can be utilized. The suction portion 40 also differs in not having the abutting surface 13b formed by an inclined surface, the additional suction ports 13c, and the air flow path 13d provided in the foregoing suction portion 10, since the elastic member 13e forms the entirety of the distal end 13a of the abutting portion 13.

In the suction portion 40, when the abutting portion 13 abuts on the outer circumferential surface of the shoulder portion 22 of the hollow molded product 20, the shape of the elastic member 13e served as the abutting surface is deformed into the state of being aligned with the outer circumferential surface of the shoulder portion 22. As a result, the contact area between the shoulder portion 22 of the hollow molded product 20 and the elastic member 13e forming the abutting surface of the abutting portion 13 increases and therefore the shoulder portion 22 of the hollow molded product 20 can be supported more securely by the abutting portion 13.

While an example where the surface shape of the elastic member 13e is a flat surface is described in the example illustrated in FIG. 6, any shape such as a curved surface can be adopted as the surface shape of the elastic member 13e. Also, while a configuration without having the abutting surface 13b formed by an inclined surface, the additional suction ports 13c, and the air flow path 13d is configured in the example illustrated in FIG. 6, even the abutting portion 13 having the elastic member 13e can have the abutting surface 13b formed by an inclined surface, the additional suction ports 13c, and the air flow path 13d. Also, while only the distal end portion of the abutting portion 13 is formed by an elastic member in the example illustrated in FIG. 6, the entirety of the abutting portion 13 or the entirety of the suction portion 40 may be formed by an elastic member.

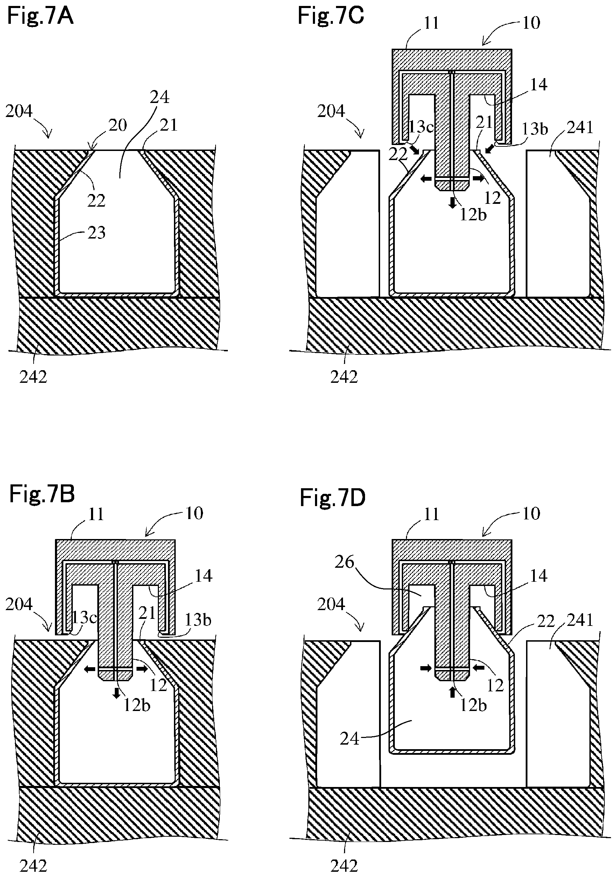

Next, based on FIGS. 7(A) to 7(D), another procedure for the foregoing suction portion 10 to hold the hollow molded product 20 will be described below. To achieve this another procedure, unlike in the foregoing procedure, the suction ports 12b of the insert portion 12 of the suction portion 10 need to function as an injection port that injects a pressurized gas. Therefore, in this example, a vacuum system that provides a suction force for the suction ports 12b and a gas supply system that supplies a pressurized gas to the suction ports 12b are connected in a switchable manner to the pipe connection portion 15 of the suction portion 10.

Such a configuration can be achieved, for example, by using a vacuum pump as the vacuum system and using a compressor as the gas supply system, and connecting each system and the pipe connection portion 15 through a three-way valve or the like. However, as a simpler configuration, it is preferable to adopt a configuration that uses an ejector and a compressor and that can switch between the state where a vacuum port of the ejector is connected to the pipe connection portion 15 and the state where an output port of the compressor is connected to the pipe connection portion 15, by a solenoid valve or the like. This configuration can achieve the function as the vacuum system by supplying a pressurized gas from the compressor to the ejector and can also make the compressor function as the gas supply system.

FIG. 7(A) is a view illustrating the state where, after a preform is molded into a shape corresponding to a cavity 241 of a movable mold 204 by a blow air, the blow pin (the foregoing blow pin-rod 233 or 234) that has injected the blow air is extracted from the opening portion 21 of the hollow molded product 20, which is the blow pin extraction port. The movable mold 204 is utilized in place of the foregoing movable mold 202 in the molding system 100.

As illustrated in FIG. 7(A), in this example, unlike the foregoing movable mold 202, the movable mold 204 is configured in such a way that a mold portion 242 corresponding to the bottom portion of the hollow molded product 20 does not move when in the split-mold opened state. The movable mold 204 except for the mold portion 242 is bisected along a vertical plane including the imaginary centerline of the body portion 23 of the hollow molded product 20 and can perform split-mold opening and closing actions, similarly to the movable mold 202. As in the movable mold 202, when in the split-mold opened state, a space is formed so that the hollow molded product 20 can be taken out in the vertical direction or the direction in which the imaginary centerline of the body portion 23 extends, without interfering with the movable mold 204.

With respect to the hollow molded product 20 in this state, the suction portion 10 is arranged so that the opening portion 21 and the insert portion 12 are in a positional relationship facing each other, and the insert portion 12 is inserted into the hollow molded product 20 through the opening portion 21, as illustrated in FIG. 7(B). Then, in this state, the state is switched to a state in which a pressurized gas is injected from the suction ports 12b of the insert portion 12 and the additional suction ports 13c of the abutting portion 13. That is, when the suction ports 13c are switched to the injection port, the hollow molded product 20 turns into the state of being pressed against the movable mold 204.

When, in this state, the movable mold 204 except for the mold portion 242 facing to the bottom portion of the hollow molded product 20 is put into the split-mold opened state, the hollow molded product 20 is held in the state where the bottom portion of the hollow molded product 20 is pressed against the mold portion 242 facing to the bottom portion, as illustrated in FIG. 7(C).

In this state, the suction ports 12b of the insert portion 12 and the additional suction ports 13c of the abutting portion 13 are switched to the sucking state. Thus, the ambient atmosphere is sucked from the suction ports 12b of the insert portion 12 and an air flow flowing into the hollow molded product 20 from outside through the opening portion 21 is generated. Then, the hollow molded product 20 moves to the proximal end of the insert portion 12 due to the air flow flowing in from the opening portion 21. With the movement of the hollow molded product 20, the opening portion 21 of the hollow molded product 20 is accommodated in the recess 14 and the shoulder portion 22 of the hollow molded product 20 abuts on the abutting surface 13b formed by the inclined surface of the abutting portion 13, as illustrated in FIG. 7(D). As a result, the shoulder portion 22 of the hollow molded product 20 is supported by the abutting portion 13 more securely, as in the example illustrated in FIG. 5(D). Also, when switching the suction ports 12b of the insert portion 12 and the additional suction ports 13c of the abutting portion 13 to the sucking state, the abutting surface 13b formed by the inclined surface may be brought closer to the shoulder portion 22 and furthermore the abutting surface 13b formed by the inclined surface may be made to abut on the shoulder portion 22, by moving the suction portion 10 in the direction of the hollow molded product 20.

As the suction portion 10 holding the hollow molded product 20 in this way is moved vertically upward by the apparatus for taking out molded product 120, the hollow molded product 20 can be taken out from the movable mold 204. According to this procedure, similarly to the foregoing procedure, even the hollow molded product 20 without having a portion protruding from the movable mold 204 can be taken out from the movable mold 204 without coming into contact with the opening portion 21 and the inner surface of the hollow molded product 20. Thus, even a molded product to which a reduction in thickness and weight or a material change to use a biodegradable resin or the like is applied can be taken out from the blow mold while avoiding damage to the hollow molded product and contamination of the opening portion.

Also, in the above-described configuration, the additional suction ports 13c can also be utilized as an injection port to inject a pressurized gas. Therefore, for example, when releasing the hollow molded product 20 that has been taken out, from the apparatus for taking out molded product 120, the hollow molded product 20 can be more securely released by injecting a pressurized gas from the suction ports 13c served as the injection port of the abutting portion 13.

While the above embodiments have the configuration in which the suction ports 12b are also served as injection ports to inject a pressurized gas, in the insert portion 12, is adopted as a particularly preferable configuration, it is also possible that a configuration in which the insert portion 12 has an injection port provided independently of the suction ports 12b is adopted. In addition, while the above embodiments have the configuration in which the suction ports 13c are also served as injection ports to inject a pressurized gas, in the abutting portion 13, is adopted, it is also possible that a configuration in which the abutting portion 13 has injection ports provided independently of the suction ports 13c is adopted.

Also, in the above-described configuration, it is not essential for the abutting portion 13 to include both the suction ports and the injection port, and a configuration in which the abutting portion 13 does not have either one of the suction ports and the injection port or has neither one, can be adopted.

In addition, while a configuration in which an ejector is arranged outside the suction portion 10 is described in the above embodiments, for example, it is possible that a configuration in which an ejector is provided at the base plate 11, in which a pressurized gas is supplied using a compressor or the like for the ejector, thus depressurizing inside the air flow path 12c connected to an air suction port of the ejector, and in which an air discharge port of the ejector is closed in the state where the pressurized gas is supplied using the compressor or the like for the ejector, thus supplying the pressurized gas into the air pipe 12c connected to the air suction port of the ejector, can be adopted.

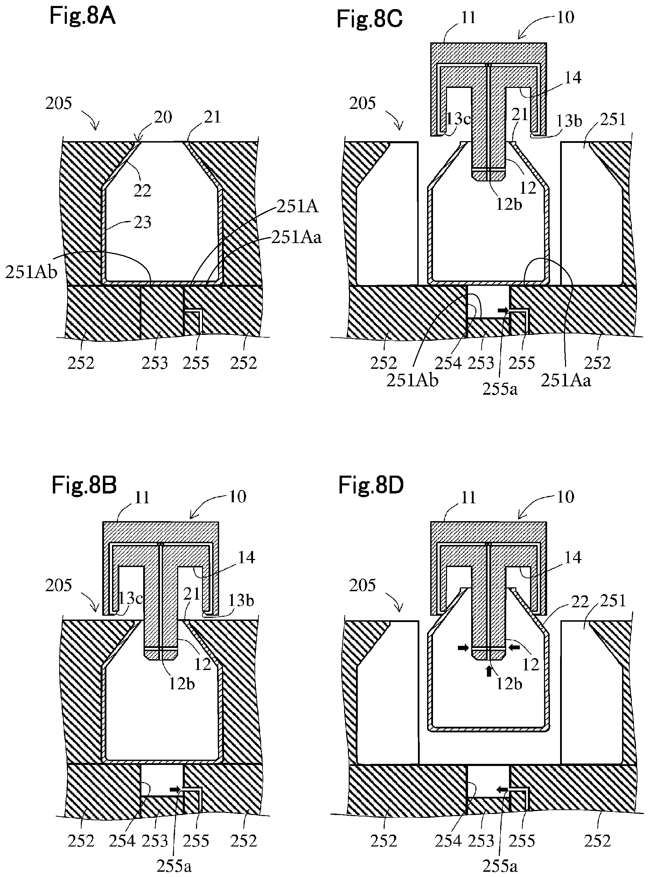

Next, based on FIGS. 8(A) to 8(D), the other procedure for the foregoing suction portion 10 to hold the hollow molded product 20 is described below. In this procedure, unlike in the procedure illustrated in FIG. 7, a configuration in which the hollow molded product 20 is held when the mold equipment (blow mold) where the molded product is blow-molded is in the split-mold opened state is adopted.

FIG. 8(A) is a view illustrating the state where, after a preform is molded into a shape corresponding to a cavity 251 of a movable mold 205 by a blow air, the blow pin (the foregoing blow pin-rod 233 or 234) that has injected the blow air is extracted from the opening portion 21 of the hollow molded product 20, which is the blow pin extraction port. The movable mold 205 is utilized in place of the foregoing movable mold 202 in the molding system 100.

As illustrated in FIG. 8(A), in this example, in the movable mold 205 forming a part of the mold equipment 114, a mold portion on the bottom portion side of the hollow molded product 20 is not divided along a vertical plane including the imaginary centerline of the body portion 23 of the hollow molded product 20, as in the foregoing movable mold 204. However, in the movable mold 205, unlike in the movable mold 204, the mold portion on the bottom portion side of the hollow molded product 20 is formed by plural mold members 252, 253. That is, the movable mold 205 comprises the first mold member 252 forming a cavity portion abutting on a circumferential edge portion of the bottom portion of the hollow molded product 20, and the second mold member 253 forming a cavity portion abutting on a center portion of the bottom portion of the hollow molded product 20. Although not particularly limited, the second mold member 253 is a circular columnar member concentric with the imaginary centerline of the body portion 23 of the hollow molded product 20 and is configured to be able to move forward and backward in the axial direction by a drive source such as a hydraulic cylinder or the like, not illustrated. The movable mold 205, except for the first mold member 252 and the second mold member 253, is bisected along a vertical plane including the imaginary centerline of the body portion 23 of the hollow molded product 20 and can perform split-mold opening and closing actions, similarly to the movable mold 202. As in the movable mold 202, when in the split-mold opened state, a space is formed so that the hollow molded product 20 can be taken out in the vertical direction or the direction in which the imaginary centerline of the body portion 23 extends, without interfering with the movable mold 204.

More specifically, the first mold member 252 has a first bottom wall surface portion 251Aa of a bottom wall surface 251A of a cavity 251, as a constituent surface of the cavity. The second mold member 253 is provided adjacent to the first mold member 252 and has a second bottom wall surface portion 251Ab of the bottom wall surface 251A of the cavity 251, as a constituent surface of the cavity. The first bottom wall surface portion 251Aa of the first mold member 252 and the second bottom wall surface portion 251Ab of the second mold member 253 form the bottom wall surface 251A of the cavity 251 when in the closed-mold state. Then, after the hollow molded product 20 is molded, the mold equipment 114 sucks and holds the hollow molded product to the first bottom wall surface portion 251Aa of the first mold member 252.

The sucking and holding operation is described below. In relation to the hollow molded product 20, when the second mold member 253 is moved in a direction away from the hollow molded product 20, an arrangement relationship between the constituent surface of the cavity 251 of the first mold member 252 and the constituent surface of the cavity of the second mold member 253 is different from that in the split-mold closed state (closed-mold state), as illustrated in FIG. 8(B). According to the arrangement relationship, the recessed part 254 with a wall surface is made from the first mold member 252. That is, after the hollow molded product is molded, the second mold member 253 is moved in such a way as to form the recessed part 254 between the second bottom wall surface portion 251Ab of the second mold member 253 and the outer surface of the hollow molded product. Also, with the movement of the second mold member 253, a suction port 255a is exposed, the suction port 255a being provided in the wall surface of the recessed part 254 formed by the first mold member 252. The suction port 255a is connected to an air flow path 255 provided in the first mold member 252, and the other end of the air flow path 255 is connected to a vacuum pump or a vacuum generator through an open/close valve or the like. By switching the opening and closing of the open/close valve and the supply and non-supply of a pressurized gas to the vacuum generator, on and off (sucking state and non-sucking state) of the suction at the suction port 255a are switched. Although not particularly limited, in this example, the suction port 255a also functions as an injection port that injects a pressurized gas. Therefore, a vacuum system that provides a suction force for the suction port 255a and a gas supply system that supplies a pressurized gas to the suction port 255a are connected in a switchable manner to the other end of the air flow path 255.

As the suction port 255a is exposed in the recessed part 254 with the movement of the second mold member 253, the suction port 255a is switched to the sucking state. Thus, the hollow molded product 20 is in the state of being sucked and held in the state where the circumferential edge portion of the bottom surface abuts on the first mold member 252. That is, the mold equipment 114 can be put in the suction-holding state where the hollow molded product is sucked and held at the first bottom wall surface portion 251Aa of the first mold member 252, by bringing into a depressurized state in the recessed part 254. In the configuration explained above, since the hollow molded product is sucked and held in the mold equipment, the molded product is held in the mold equipment even when the mold equipment is in the split-mold opened state in order to take out the molded product. Therefore, the outer circumferential surface of the hollow molded product can be made to abut on the abutting portion 13 more securely and the hollow molded product can be taken out more easily. Then, the suction portion 10 is arranged in the state where the opening portion 21 and the insert portion 12 face each other, and the insert portion 12 is inserted into the hollow molded product 20 through the opening portion 21, as illustrated in FIG. 8(B).

In this state, even when the movable mold 205 except for the first mold portion 252 and the second mold portion 253 is put in the split-mold opened state, the hollow molded product 20 is sucked and held in the state where the circumferential edge portion of the bottom surface of the hollow molded product 20 abuts on the first mold member 252, as illustrated in FIG. 8(C).

In this state, the suction ports 12b of the insert portion 12 and the suction ports 13c of the abutting portion 13 are switched to the sucking state. Thus, the ambient atmosphere is sucked from the suction ports 12b of the insert portion 12 and an air flow flowing into the hollow molded product 20 from outside through the opening portion 21 is generated. Also, at this time, bringing into a nondepressurized state in the recessed part 254 forms the non-suction-holding state where the hollow molded product is not sucked and held at the first bottom wall surface portion 251Aa of the first mold member 252. In this embodiment, the suction port 255a exposed in the recessed part 254 is switched to the state of injecting the pressurized gas. Thus, the sucking and holding of the bottom portion of the hollow molded product 20 is cancelled, and the hollow molded product 20 moves to the proximal end side of the insert portion 12 due to the pressurized gas injected from the suction port 255a and the air flow flowing in from the opening portion 21. With the movement of the hollow molded product 20, the opening portion 21 of the hollow molded product 20 is accommodated in the recess 14 and the shoulder portion 22 of the hollow molded product 20 abuts on the abutting surface 13b formed by the inclined surface of the abutting portion 13, as illustrated in FIG. 8(D). As a result, the shoulder portion 22 of the hollow molded product 20 is supported by the abutting portion 13 more securely, as in the example illustrated in FIG. 5(D). In this example, since the hollow molded product 20 is sucked and held at the first mold member 252, the abutting surface 13b may be brought closer to the shoulder portion 22 and furthermore the abutting surface 13b may be made to abut on the outer circumferential surface forming the shoulder portion 22, by moving the suction portion 10 in the direction of the hollow molded product 20 when the movable mold 205 is put in the split-mold opened state.

As the suction portion 10 holding the hollow molded product 20 in this way is moved vertically upward by the apparatus for taking out molded product 120, the hollow molded product 20 can be taken out from the movable mold 204. According to this procedure, similarly to the foregoing procedure, even the hollow molded product 20 without having a portion protruding from the movable mold 204 can be taken out from the movable mold 204 without coming into contact with the opening portion 21 and the inner surface of the hollow molded product 20. Thus, even a hollow molded product to which a reduction in thickness and weight or a material change to use a biodegradable resin or the like is applied can be taken out from the blow mold in the state where damage to the molded product and contamination of the opening portion are avoided.

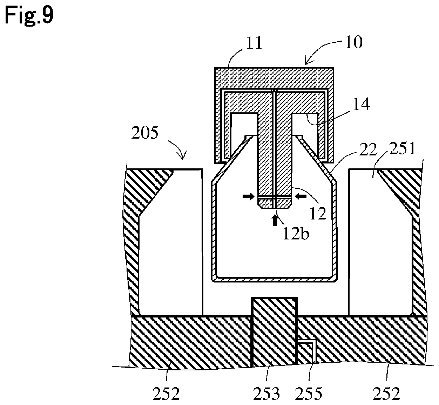

While a configuration in which the suction port 255a is also served as an injection port to inject a pressurized gas is adopted as a particularly preferable form in the above-described configuration, a configuration in which the recessed part 254 has an injection port provided independently of the suction port 255a can be adopted. Also, in view of assisting the taking out of the hollow molded product 20 that is sucked and held, the second mold member 253 may be provided to be movable in the direction of pressing the hollow molded product 20, as illustrated in FIG. 9, in place of the injection port to inject the pressurized gas. Also, it is not essential to provide such a configuration to assist the taking out of the hollow molded product 20 that is sucked and held, and a configuration to simply switch the suction port 255a to the non-sucking state can be adopted.

Also, in the above-described configuration, the insert portion 12 is inserted in the hollow molded product 20 when in the split-mold closed state as illustrated in FIG. 8(B) in view of the fall prevention of the hollow molded product 20. However, in the above-described configuration, the insert portion 12 may be inserted into the hollow molded product 20 when after turned into the split-mold opened state.

Also, in the above-preferable configuration, the second mold member 253 is driven. However, the first mold member 252 and the second mold member 253 may be required to be movable relatively to each other. Also, it is not essential to provide the suction port 255a. For example, if in the state where the cavity constituent surface of the first mold member 252 surrounds the circumference of the cavity constituent surface of the second mold member 253, a suction force to the molded product can be generated by arranging the cavity constituent surface of the first mold member and the cavity constituent surface of the second mold member differently from the closed-mold state. A configuration in which the molded product is sucked and held by this suction force may be also adopted. Moreover, the part of the molded product that is sucked and held is not limited to the bottom portion, and other parts may be sucked and held.

As described above, according to the present invention, even a molded product without having a portion protruding from the blow mold can be taken out from the blow mold without coming into contact with the opening portion or the inner surface.

The foregoing embodiment is not to limit the technical scope of the present invention and various modifications and applications can be made within the scope of the present invention, other than the already described elements. For example, required elements in the above-described examples can be combined arbitrarily where appropriate.

Also, the number, shape, and arrangement position of suction ports, and the number, shape, and arrangement position of injection ports in the above-described suction portion are simply examples and can be modified where appropriate. Similarly, the number, shape, and arrangement position of recesses and protrusions in the above-described mold equipment are simply examples and can be modified where appropriate. Moreover, the physical shape and material of the foregoing elements can be arbitrarily modified within a scope that achieves the effects of the present invention.

### Industrial Applicability

According to the present invention, even a molded product without having a portion protruding from the blow mold can be taken out from the blow mold without coming into contact with the opening portion and the inner surface, and this is advantageous as a molding system, an apparatus for taking out molded product, a mold equipment, a molding machine, and a method for driving a mold equipment.

### Reference Numerals List

10, 40 suction portion
11 base plate
12 insert portion
12b suction port (injection port)
12c air flow path
13 abutting portion
13b inclined surface (abutting surface abutting on molded product)
13c suction port (injection port)
13d air flow path
13e elastic member
14 recess
15 pipe connection portion
20 hollow molded product
21 opening portion (blow pin extraction port)
22 shoulder portion (outer circumferential surface)
23 body portion
100 molding system
110 molding machine
114 mold equipment
120 apparatus for taking out molded product
202, 204, 205 movable mold (blow mold)
221, 241, 251 cavity for blow molding
252 first mold member
253 second mold member
254 recessed part
255a suction port (injection port)

## Claims

1. A molding system for manufacturing a hollow molded product by blow molding, comprising:
a molding machine having a mold equipment in which the hollow molded product is blow-molded in a cavity; and
an apparatus for taking out molded product that sucks the hollow molded product molded in the mold equipment by a suction portion and takes out the hollow molded product from the mold equipment,
wherein the suction portion of the apparatus for taking out molded product including:
an insert portion inserted in the hollow molded product through a blow pin extraction port of the hollow molded product;
an abutting portion arranged by being spaced apart from the insert portion, and abutting on a part of an outer circumferential surface of the hollow molded product that is spaced apart by a predetermined distance from the blow pin extraction port;
a recess provided between the insert portion and the abutting portion, the recess forming a closed space communicating with an internal space in the hollow molded product when a part of the hollow molded product where the blow pin extraction port is formed is accommodated in the recess in a state where the abutting portion is abutting on the outer circumferential surface of the hollow molded product; and
a suction port provided in the insert portion and sucking air in the internal space and the closed space, and
wherein the mold equipment including:
a first mold member having a first bottom wall surface portion of a bottom wall surface of the cavity; and
a second mold member provided adjacent to the first mold member and having a second bottom wall surface portion of the bottom wall surface of the cavity,
wherein the first bottom wall surface portion of the first mold member and the second bottom wall surface portion of the second mold member form the bottom wall surface of the cavity when in a closed-mold state, and
wherein the mold equipment is configured to suck and hold the hollow molded product at the first bottom wall surface portion of the first mold member after the hollow molded product is molded.

2. The molding system according to claim 1, wherein
the mold equipment is configured that
the second mold member is moved so as to form a recessed part between the second bottom wall surface portion of the second mold member and an outer surface of the hollow molded product after the hollow molded product is molded,
a suction-holding state, where the hollow molded product is sucked and held to the first bottom wall surface portion of the first mold member by bringing an inside of the recessed part into a depressurized state, is prepared, and
a non-suction-holding state, where the hollow molded product is not sucked and held to the first bottom wall surface portion of the first mold member is provided by bringing the inside of the recessed part into a nondepressurized state, is formed.

3. The molding system according to claim 2, wherein
the suction-holding state is provided by bringing the inside of the recessed part into a suction state, and
the non-suction-holding state is provided by bringing the inside of the recessed part into a non-suction state or by bringing the inside of the recessed part into an increased-pressure state.

4. The molding system according to claim 1, wherein
the mold equipment has plural mold members forming a wall surface except the bottom wall surface of the cavity, and
the second mold member moves in such a way as to move the hollow molded product in a direction away from the first bottom wall surface portion after the plural mold members are taken out from the hollow molded product.

5. A molding system for manufacturing a hollow molded product by blow molding, comprising:
a molding machine having a mold equipment in which the hollow molded product is blow-molded; and
an apparatus for taking out molded product that sucks the hollow molded product molded in the mold equipment by a suction portion and takes out the hollow molded product from the mold equipment,
wherein the suction portion of the apparatus for taking out molded product including:
an insert portion inserted in the hollow molded product through a blow pin extraction port of the hollow molded product;
an abutting portion arranged by being spaced apart from the insert portion, and abutting on a part of an outer circumferential surface of the hollow molded product that is spaced apart by a predetermined distance from the blow pin extraction port;
a recess provided between the insert portion and the abutting portion, the recess forming a closed space communicating with an internal space in the hollow molded product when a part of the hollow molded product where the blow pin extraction port is formed is accommodated in the recess in a state where the abutting portion is abutting on the outer circumferential surface of the hollow molded product; and
a suction port provided in the insert portion and sucking air in the internal space and the closed space.

6. The molding system according to claim 5, wherein the suction portion has a coupling portion coupling the insert portion with the abutting portion and forming the recess between the insert portion and the abutting portion,
an additional suction port that sucks the outer circumferential surface of the hollow molded product is provided at an abutting surface abutting on the hollow molded product, of the abutting portion, and
an air flow path communicating with the suction port and the additional suction port is formed in the insert portion, the coupling portion, and the abutting portion.

7. The molding system according to claim 5, wherein
the suction port and the additional suction port of the insert portion are also used as an injection port to inject a pressurized gas.

8. A mold equipment used in a molding system where a suction portion of an apparatus for taking out molded product sucks a hollow molded product blow-molded by the mold equipment of a molding machine having the mold equipment in which the hollow molded product is blow-molded in a cavity, the mold equipment comprising:
a first mold member forming a part of the cavity; and
a second mold member provided adjacent to the first mold member and forming a part of the cavity,
wherein a constituent surface of the cavity of the first mold member and a constituent surface of the cavity of the second mold member are arranged differently from a closed-mold state, and the hollow molded product molded in the cavity in a state of abutting on the constituent surface of the cavity of the first mold member is sucked and held in the mold equipment used in the molding system.

9. The mold equipment used in the molding system according to claim 8, wherein
the first mold member has a first bottom wall surface portion of a bottom wall surface of the cavity, as a constituent surface of the cavity,
the second mold member has a second bottom wall surface portion of the bottom wall surface of the cavity, as a constituent surface of the cavity,
the first bottom wall surface portion of the first mold member and the second bottom wall surface portion of the second mold member form the bottom wall surface of the cavity when in a closed-mold state, and
the mold equipment is used in the molding system being configured that the hollow molded product is sucked and held at the first bottom wall surface portion of the first mold member after the hollow molded product is molded.

10. The mold equipment used in the molding system according to claim 9, configured
to move the second mold member so as to form a recessed part between the second bottom wall surface portion of the second mold member and an outer surface of the hollow molded product, after the hollow molded product is molded,
to provide a suction-holding state where the hollow molded product is sucked and held at the first bottom wall surface portion of the first mold member by bringing the inside of the recessed part into a pressurized state, and
to provide a non-suction-holding state where the hollow molded product is not sucked and held at the first bottom wall surface portion of the first mold member by bringing the inside of the recessed part into a nondepressurized state.

11. The mold equipment used in the molding system according to claim 10, wherein
the suction-holding state is provided by bringing the inside of the recess into a suction state, and
the non-suction-holding state is provided by bringing the inside of the recess into a non-suction state or a pressurized state in the recess.

12. The mold equipment used in the molding system according to claim 11, comprising:
plural mold members forming a wall surface except the bottom wall surface of the cavity,
wherein the molding system is configured to maintain the suction state for a predetermined period, after the plural mold members are taken out from the hollow molded product.

13. The mold equipment used in the molding system according to claim 11, comprising:
a suction port exposed in the recessed part and sucking an atmosphere inside the recessed part.

14. The mold equipment used in the molding system according to claim 8, wherein
the second mold member is provided to be movable in a direction of pressing the hollow molded product molded in the cavity.

15. The mold equipment used in the molding system according to claim 11, comprising:
an injection port exposed in the recessed part and injecting a pressurized gas in the recessed part.

16. An apparatus for taking out molded product that sucks a blow-molded hollow molded product by a suction portion and takes out the hollow molded product from a mold equipment of a molding machine,
wherein the suction portion including:
an insert portion inserted in the hollow molded product through a blow pin extraction port of the hollow molded product;
an abutting portion arranged by being spaced apart from the insert portion, and abutting on a part of an outer circumferential surface of the hollow molded product that is spaced apart by a predetermined distance from the blow pin extraction port;
a recess provided between the insert portion and the abutting portion, the recess forming a closed space communicating with an internal space in the hollow molded product when a part of the hollow molded product where the blow pin extraction port is formed is accommodated in the recess in a state where the abutting portion is abutting on the outer circumferential surface of the hollow molded product; and
a suction port provided at the insert portion and sucking air in the internal space and the closed space.

17. The apparatus for taking out molded product according to claim 16, wherein
the abutting portion has an additional suction port to suck the outer circumferential surface of the hollow molded product, at an abutting surface abutting on the hollow molded product.

18. The apparatus for taking out molded product according to claim 16, wherein
the abutting portion has an elastic member at an abutting surface abutting on the hollow molded product.

19. A method for manufacturing a hollow molded product by blow molding, using
a molding machine having a mold equipment in which the hollow molded product is blow-molded in a cavity, and
an apparatus for taking out molded product that sucks the hollow molded product molded in the mold equipment by a suction portion and takes out the hollow molded product from the mold equipment,
the method comprising:
a step of preparing the mold equipment that includes a first mold member having a first bottom wall surface portion of a bottom wall surface of the cavity, and a second mold member provided adjacent to the first mold member and having a second bottom wall surface portion of the bottom wall surface of the cavity;
a step of configuring the first bottom wall surface portion of the first mold member and the second bottom wall surface portion of the second mold member to form the bottom wall surface of the cavity when in a closed-mold state; and
a step of sucking and holding the hollow molded product at the first bottom wall surface portion of the first mold member after the hollow molded product is molded.
